# EUROPEAN PATENT APPLICATION

(11) **EP 0 887 693 A1**
(43) Date of publication of application: **30.12.1998**
(21) Application number: 97907301.2
(22) Date of filing: 13.03.1997
(51) Int. Cl.: G02F 1/1337, B41F 17/14

(54) **THIN FILM FORMING DEVICE**

(30) Priority: 15.03.1996 JP 87294/96
(71) Applicant: NISSHA PRINTING CO., LTD., Nakagyo-ku Kyoto-shi Kyoto 604 (JP)
(72) Inventor: MASAKI, Kenichi, Nakagyo-ku, Kyoto-shi, Kyoto 604 (JP); YAMADA, Shinya, Nakagyo-ku, Kyoto-shi, Kyoto 604 (JP); MIURA, Daisuke, Nakagyo-ku, Kyoto-shi, Kyoto 604 (JP)
(74) Representative: HOFFMANN - EITLE
(86) International application number: PCT/JP97/00793
(87) International publication number: WO 97/34187

(57) **Abstract**

A thin film formation apparatus comprises a printing roll 3 having an elastic letterpress 31 of resin or rubber fitted at a part of a surface of a cylinder part 30 and, an intaglio roll 4 rotating while being faced to the printing roll 3 thereby transferring ink to a surface of the elastic letter-press 31 through touch with the printing roll 3. The thin film formation apparatus further comprises a pair of printing roll side contact bodies 300 on a drum portion or a rotating shaft of the printing roll, and a pair of intaglio roll side contact bodies 400 on a drum portion or a rotating shaft of the intaglio roll, the printing roll side contact bodies 300 and the intaglio roll side contact bodies 400 continuing to contact with each other at least before and during the contact of the elastic letterpress 31 with the intaglio roll 4 to form a thin film of uniform film thickness.

## Description

### TECHNICAL FIELD

The present invention relates to a thin film formation apparatus which can print and apply thin films of a uniform thickness precisely in thin film formation of manufacture process of electronic components.

### BACKGROUND ART

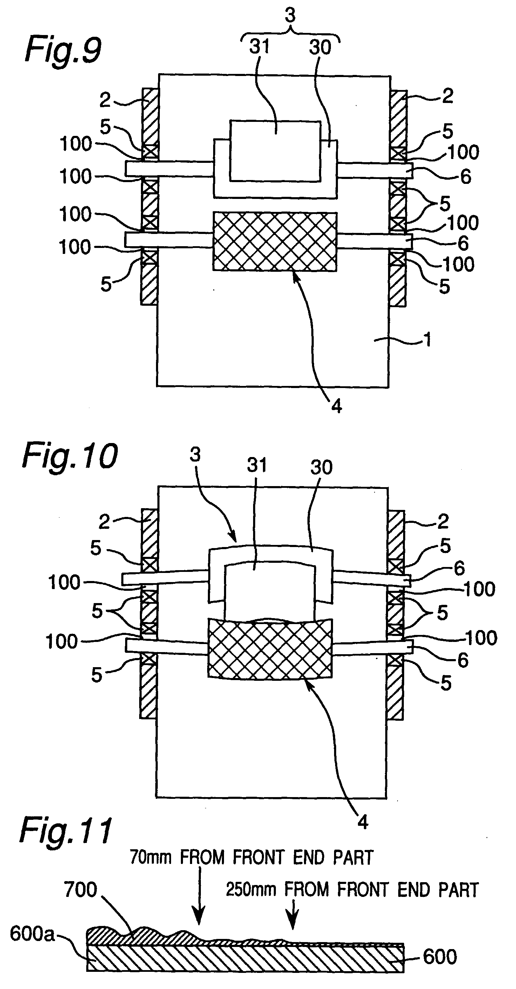

A conventional thin film formation apparatus comprises, as shown in Fig. 9, at least a printing roll 3 having an elastic letterpress 31 of resin or rubber fitted at a part of a surface of a cylinder part 30 and, an intaglio roll (Anilox roll) 4 rotating while being faced to the printing roll 3 thereby transferring ink to a surface of the elastic letter-press 31 through touch with the printing roll 3. In the apparatus of the constitution, ink is transferred to a surface of a body to be printed (plate glass, plastic plate, film that can be wound in a roll, etc.) by pressing the elastic letterpress 30 into contact with the body to be printed, so as to form a thin film through printing.

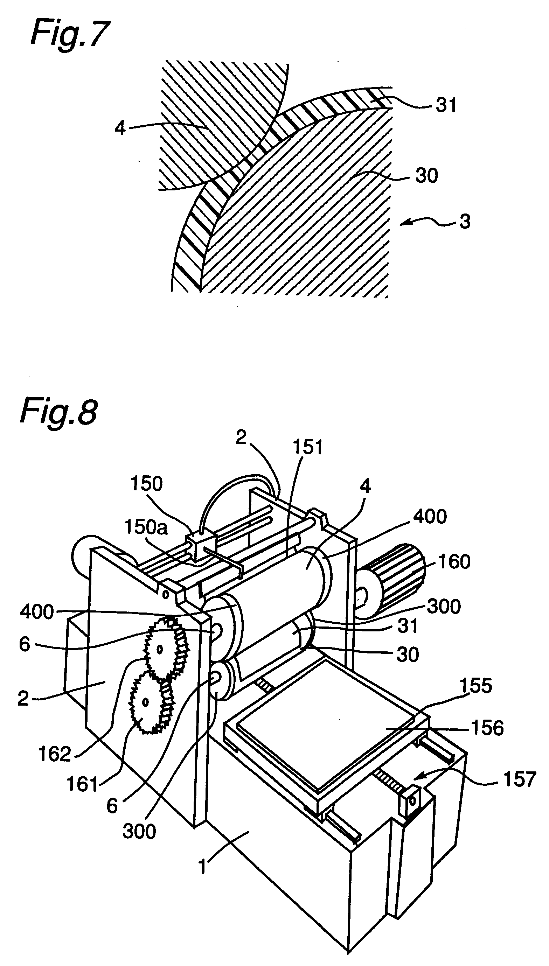

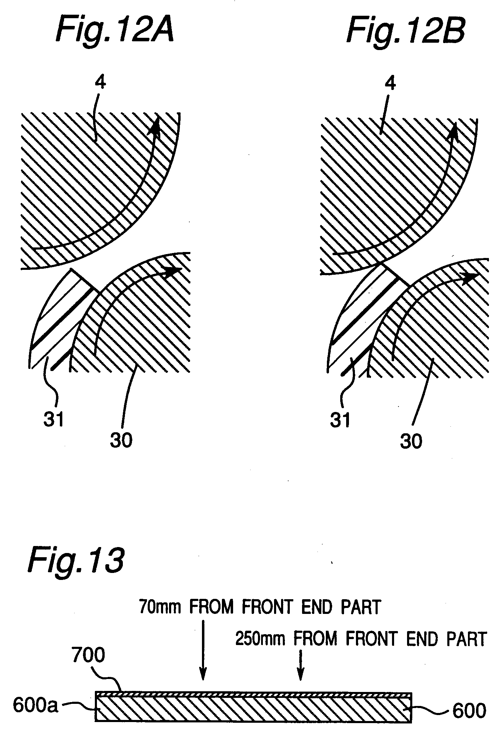

In the thin film formation apparatus, while the cylinder part 30 of the printing roll 3, specifically, a part without the elastic letterpress 31 and a non-printing image part never come in touch with the intaglio roll 4 (with reference to Fig. 12A), a printing image part of the letterpress 31 of the printing roll 3 is brought in touch with the intaglio roll 4 (referring to Figs. 7, 12B). The contact is kept also in a driving system, for example, pinions of rotary shafts 6 of the intaglio roll 4 and the printing roll 3.

A primary usage of the thin film formation apparatus is to form liquid crystal orientation films in a production process of electronic components such as display panels of liquid crystal display devices, etc. Although the liquid crystal orientation film of the display panel is naturally required to be uniform in thickness, the display panel has become larger in size and of higher image quality every year, and accordingly film thickness uniformity with higher accuracy is demanded.

Meanwhile, a drive environment for the thin film formation apparatus permits only an expensive clean room to avoid minute dust in forming the thin films such as the liquid crystal orientation films or the like. The thin film formation apparatus is therefore required to be compact and light-weight in order to economically assure a space for the clean room as small as possible.

On the other hand, in order to form the thin films of high accuracy, it is necessary that a resin liquid as the ink has a viscosity as low as 50-100cp in comparison with a flexographic ink, a thin elastic letterpress is used to secure a size accuracy thereof and, it is necessary to compensate for rattling and bending of rotary shafts of the printing roll and the intaglio roll. As such, a contact pressure between the elastic letterpress and intaglio roll is generally set large as compared with that in the case of flexography, and thereby, it is necessary to transfer the ink from an ink hold part of the intaglio roll to the elastic letterpress uniformly. The contact pressure is measured by the pressed amount of the letterpress 31 by the intaglio roll 4 (referring to Fig. 7). The "pressed amount" is a difference of thicknesses of the elastic letterpress 31 between when the printing image part of the letterpress 31 is not pressed by a surface of the intaglio roll 4 and when the printing image part of the letterpress 31 is depressed to sink by the intaglio roll 4.

The above-described requirements lead to the following issues, though.

During the rotation of the printing roll 3 and intaglio roll 4, a contact state (referring to Figs. 7, 12B) and a non-contact state (referring to Fig. 12A) are alternately brought about between the elastic letterpress 31 and intaglio roll 4. Because of the large contact pressure between the letterpress 31 and intaglio roll 4 to be exerted in the contact state, the intaglio roll 4 collides sideways to the printing image part of the letterpress 31 when the non-contact state is changed to the contact-state, that is, when the surface of the intaglio roll 4 rides over the surface of the elastic letterpress 31 (referring to Fig. 12B). Impacts and reaction from the elastic letterpress 31 at this time are transmitted to the rotary shafts 6 of the printing roll 3 and intaglio roll 4, which in turn vibrates the printing roll 3 and intaglio roll 4 due to a play of a bearing 5 itself at a bearing part or a play 100 between the rotary shaft 6 and an inner ring of the bearing (referring to Figs. 9, 10). Microscopically, the printing roll 3 and intaglio roll 4 rotate bounding in the contact state with each other. The printing roll 4 prints while bounding on the body to be printed.

When the letterpress 31 of the printing roll 3 and intaglio roll 4 are turned from the non-contact state to the contact state, in other words, when the surface of the intaglio roll 4 rides over the surface of the letterpress 31, the printing roll 3 including the cylinder part 30 and the intaglio roll 4 are undesirably bent and, as a reaction to the bend, the printing roll 3 and intaglio roll 4 are vibrated. In consequence, microscopically, the printing roll 3 and intaglio roll 4 rotate while bounding and keeping touch with each other. The printing roll 3 performs printing while bounding on the body to be printed (referring to Fig. 10).

As a result, stripe patterns (where the amount of ink transferred or thickness of a film formed by ink is alternately changed large and small) are formed to the letterpress 31 and the body to be printed, in parallel to an axial direction of the roll.

Therefore, the present invention is devised to remove the above-described disadvantages, and has for its object to provide a thin film formation apparatus capable of forming thin films of a uniform thickness.

### DISCLOSURE OF INVENTION

In order to achieve the aforementioned objective, according to the present invention, a thin film formation apparatus is constituted as follows.

In a first aspect of the present invention, there is provided a thin film formation apparatus including a printing roll having a resin or rubber elastic letterpress fitted at a surface thereof, and an intaglio roll for transferring ink to a surface of the elastic letterpress through contact with the printing roll, wherein contact members are provided at the printing roll and intaglio roll for absorbing or easing contact impacts at the contact between the intaglio roll and the elastic letterpress of the printing roll by contacting the contact members with each other prior to the contact therebetween.

According to a second aspect of the present invention, in the first aspect, there is provided the thin film formation apparatus wherein the contact members are constructed by a pair of printing roll contact bodies set at a cylinder part or a rotary shaft of the printing roll, and a pair of intaglio roll contact bodies set at a cylinder part or a rotary shaft of the intaglio roll, so that the contact bodies are in touch with each other continuously at least before the elastic letter-press comes in touch with the intaglio roll and throughout the contact, thereby to absorb or ease the contact impacts between the intaglio roll and the elastic letterpress of the printing roll.

According to a third aspect of the present invention, in the second aspect, there is provided the thin film formation apparatus wherein the contact bodies are adapted to be in touch with each other continuously at least before the elastic letter-press comes in touch with the intaglio roll and throughout the contact, thereby to absorb or ease the contact impacts between the intaglio roll and the elastic letterpress of the printing roll, whereby before the elastic letterpress and the intaglio roll start to come in touch with each other, a stress resulting from the contact between the printing roll contact bodies and the intaglio roll contact bodies refrains the cylinder part of the printing roll inside the pair of the printing roll contact bodies or rotary shaft of the printing roll, or/and the cylinder part of the intaglio roll inside the pair of the intaglio roll contact bodies or rotary shaft of the intaglio roll from bending.

According to a fourth aspect of the present invention, in the second or third aspect, there is provided the thin film formation apparatus wherein the contact bodies are adapted to be in touch with each other continuously at least before the elastic letterpress comes in touch with the intaglio roll and throughout the contact, thereby to absorb or ease the contact impacts between the intaglio roll and the elastic letterpress of the printing roll, whereby a stress resulting from the contact between the printing roll contact bodies and the intaglio roll contact bodies presses the printing roll and the intaglio roll in an opposite direction to a direction in which the rolls are pressed in touch with each other, by the amount of a play of bearings supporting the respective rotary shafts of the printing roll and the intaglio roll in a rotatable fashion to supporting members and a play between each rotary shaft at a bearing part of the bearing and an inner ring of the bearing, thereby to substantially reduce the plays.

According to a fifth aspect of the present invention, in any one of the first-fourth aspects, there is provided the film formation apparatus wherein the pair of intaglio roll contact bodies are set at the cylinder part of the intaglio roll and a pair of projecting parts or groove parts are formed between an ink hold part of the intaglio roll and the intaglio roll contact body so as to prevent the ink from flowing from the ink hold part to the intaglio roll contact bodies.

According to a sixth aspect of the present invention, in any one of the first-fifth aspects, there is provided the thin film formation apparatus wherein a resin or rubber elastic body is fitted at a surface of at least either of the printing roll contact bodies and the intaglio roll contact bodies.

According to a seventh aspect of the present invention, in any one of the first-sixth aspects, there is provided the film formation apparatus wherein a resin or rubber elastic body is fitted at a surface of at least either of the printing roll contact bodies and the intaglio roll contact bodies, which is formed of the same or same series material as that of the elastic letterpress mounted to the printing roll.

According to an eighth aspect of the present invention, in any one of the first-seventh aspects, there is provided the thin film formation apparatus wherein an elastic body is fitted in an exchangeable manner at a surface of the printing roll contact bodies or the intaglio roll contact bodies, whereby a contact pressure between the elastic letterpress of the printing roll and the surface of the intaglio roll is changed by changing one of a breadth, a thickness and a hardness of at least one of the elastic bodies.

### BRIEF DESCRIPTION OF DRAWINGS

These and other objects and features of the present invention will become clear from the following description taken in conjunction with the preferred embodiments thereof with reference to the accompanying drawings, in which:
Fig. 1 is a partly sectional plan view of a thin film formation apparatus according to a first embodiment of the present invention;
Fig. 2 is a partly sectional plan view of the thin film formation apparatus in the first embodiment of the present invention;
Fig. 3 is a partly sectional plan view of a thin film formation apparatus according to a second embodiment of the present invention;
Fig. 4 is a partly sectional plan view of a thin film formation apparatus according to a third embodiment of the present invention;
Fig. 5 is a partly sectional plan view of a thin film formation apparatus according to a fourth embodiment of the present invention;
Fig. 6 is a perspective view of an example of contact bodies of a thin film formation apparatus according to a fifth embodiment of the present invention;
Fig. 7 is a diagram explanatory of a contact state (pressed state) between a printing roll and an intaglio roll of a this film formation apparatus;
Fig. 8 is a perspective view of the thin film formation apparatus in each of the above embodiments of the present invention;
Fig. 9 is a plan view of a convention-al thin film formation apparatus;
Fig. 10 is a plan view of another conventional thin film formation apparatus;
Fig. 11 is a sectional view of a glass substrate printed in a comparative example to the thin film formation apparatus of the embodiment of the present invention;
Figs. 12A and 12B are diagrams explanatory of a non-contact state between a printing roll and an intaglio roll of the conventional thin film formation apparatus and a state when a contact is started therebetween; and
Fig. 13 is a sectional view of a glass substrate printed by the thin film formation apparatus in the embodiment shown in Fig. 6 of the present invention.

### BEST MODE FOR CARRYING OUT THE INVENTION

Before the description of the present invention proceeds, it is to be noted that like parts are designated by like reference numerals throughout the accompanying drawings.

Embodiments of the present invention will be described more in detail with reference to the drawings.

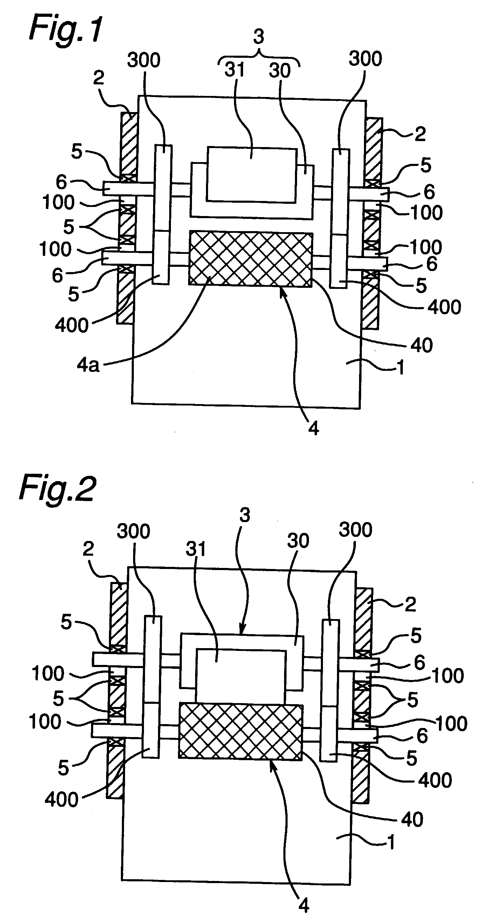

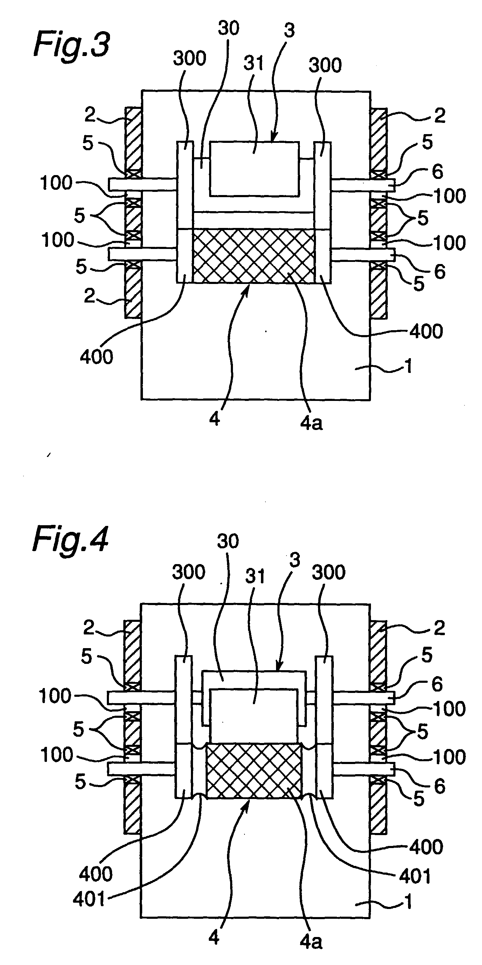

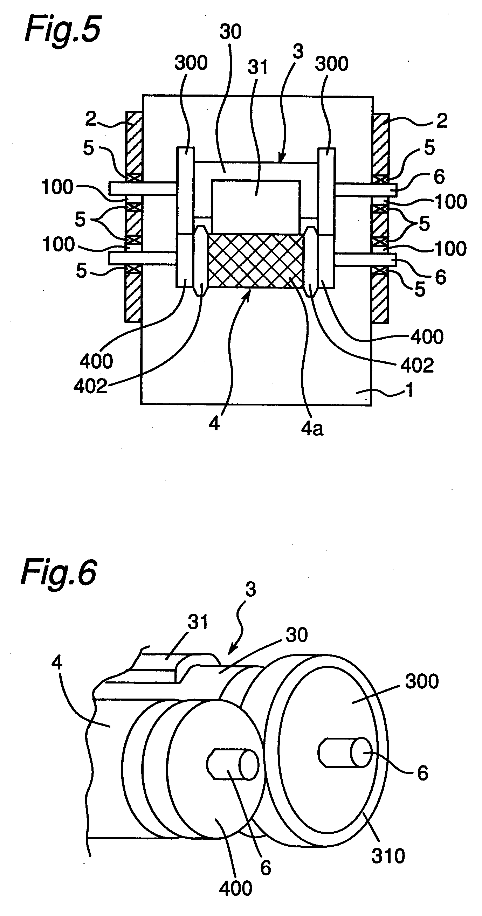

Figs. 1, 2 are plan views, partly sectional, of a thin film formation apparatus according to a first embodiment of the present invention. Figs. 3-5 are plan views, partly sectional, of thin film formation apparatuses according to a second-a fourth embodiments of the present invention. Fig. 6 is a perspective view of an example of contact bodies of a thin film formation apparatus according to a fifth embodiment of the present invention. Fig. 7 is a sectional view for explaining the pressed amount. Fig. 8 is a perspective view of one example of the thin film formation apparatus according to any of the above embodiments. In the drawings, reference numerals represent respectively: 1 a base, 2 a supporting frame, 3 a printing roll, 4 an intaglio roll having an ink hold part 4a for holding ink, 5 a bearing, 300 a printing roll contact body and 400 an intaglio roll contact body.

As shown in Figs. 1-5, in the thin film formation apparatus according to any of the above embodiments of the present invention, the supporting frame 2 is provided at both lateral sides of the base 1. The bearing 5 for receiving each rotary shaft 6 of the printing roll 3 and intaglio roll 4 is fixed to each supporting frame 2. The intaglio roll 4 and the printing roll 3 are supported in a rotatable fashion to the supporting frames 2 via the respective bearings 5. The intaglio roll 4 and the printing roll 3 rotate synchronously or rotate at different peripheral velocities while keeping touch with each other. Because of a contact between the intaglio roll 4 and an elastic letter-press 31 of the printing roll 3, each rotary shaft 6 of the intaglio roll 4 and printing roll 3 is pressed to inner rings of the bearings 5. The thin film formation apparatus according to each of the embodiments of the present invention can be designed to include above the intaglio roll 4 as illustrated in Fig. 8 an ink feed device 150 for supplying ink from an ink nozzle 150a to the intaglio roll 4, a doctor blade 151 for filling the ink fed to the intaglio roll 4 to the ink hold part of the intaglio roll 4 and thus holding a specified amount of ink therein, etc. Moreover, a printing table 155 is arranged at an upper face of the base 1, on which a body 156 to be printed is loaded. The body 156 to be printed may be printed by the elastic letterpress 31 of the printing roll 3 while the body 156 is reciprocated by a drive device 157 under the printing roll 3. In Fig. 8, 160 denotes a driving motor connected to one end of the rotary shaft 6 of the printing roll 3 drives and rotates the printing roll 3 via the rotary shaft 6. 161 denotes a first pinion which is fixed to the other end of the rotary shaft 6 of the printing roll 3. 162 denotes a second pinion which is fixed to one end of the rotary shaft 6 of the intaglio roll 4 and always meshed with the first pinion 161 so as to rotate the rotary shaft 6 of the intaglio roll 4 synchronously with the rotation of the first pinion 161. Both the printing roll 3 and the intaglio roll 4 may be driven by one motor 160 described above.

The printing roll 3 has a cylinder part 30 having the elastic letterpress 31 and secured to the rotary shaft 6. The elastic letterpress 31 is a plate for transferring the ink transferred to a surface thereof from the ink hold part 4a of the intaglio roll 4 to the body 156 to be printed. The elastic letterpress 31 is set at a predetermined point of a surface of the cylinder part 30 of the printing roll 3. The elastic letterpress 31 is formed of, e.g., rubber such as butyl rubber, synthetic resin such as nylon resin, photosensitive rubber or photosensitive resin, or the like. The elastic letterpress 31 has a printing image part to which the ink is transferred from the intaglio roll 4. The letterpress 31 may include a non-printing image part which does not protrude and to which the ink is not transferred.

A pair of the printing roll contact bodies 300 may be fixed to the rotary shaft 6 separately from the cylinder part 30 of the printing roll 3, as in the first embodiment shown in Figs. 1 and 2 and the third embodiment shown in Fig. 4. Alternatively, the printing roll contact bodies 300 may be disposed at both ends of the cylinder part 30 of the printing roll 3 so as to hold the elastic letterpress 31 between them, as in the second embodiment of Fig. 3 and the fourth embodiment of Fig. 5. The surface of the cylinder part 30 of the printing roll 3 itself may be utilized as the printing roll contact body 300.

The disk-like contact body 300 may be provided in the whole circumference of the cylinder part 30 or the rotary shaft 6 of the printing roll 3, or the contact body 300 shaped like a fan may be arranged at a part of the circumference of the cylinder part 30 or the rotary shaft 6 of the printing roll 3.

The contact body 300 may have a diameter of a total thickness of the cylinder part 30 and the elastic letterpress 31. A larger or smaller diameter than the above can do. The diameter of the printing roll contact body 300 is variable within an allowance of approximately ±2.0mm.

The intaglio roll 4 has its cylinder part fixed to the rotary shaft 6. The intaglio roll 4 rotates in synchronization with the printing roll 3 or at a different peripheral velocity therefrom. A plating layer is formed on a surface of an iron core of the cylinder part, with many ink cells formed at a surface thereof. The ink cells are the ink hold part of each depth of, for instance, 10-several tens µm. The cylinder part of the intaglio roll comes in touch with the elastic letterpress 31 of the cylinder part 30 of the printing roll 3 with a constant pressure. In one example, the second pinion may be fixed to one end of the rotary shaft 6 of the intaglio roll 4, so that the rotary shaft of the intaglio roll 4 is coupled to the first pinion of the printing roll 3, as in Fig. 8. Otherwise, an intaglio roll driving motor may be installed at one end of the rotary shaft 6 of the intaglio roll 4, without the rotary shaft 6 being coupled to the first pinion of the printing roll 3.

As in the first embodiment shown in Figs. 1 and 2 and the third embodiment of Fig. 4, each of a pair of intaglio roll contact bodies 400 may be separated from the cylinder part 40 of the intaglio roll 4 and fixed to the rotary shaft 6. However, the intaglio roll contact bodies 400 may be arranged at both ends of the cylinder part 40 of the intaglio roll 4 via the ink hold part 4a, as in the second embodiment of Fig. 3 and the fourth embodiment shown in Fig. 5. The intaglio roll contact body 400 may be the surface of the cylinder part 40 of the intaglio roll 4 itself.

The intaglio roll contact body 400 may be a disk-shaped body covering the whole circumference of the cylinder part 40 or the rotary shaft 6 of the intaglio roll 4. Or, the fan-shaped intaglio roll contact body may be fitted at a part of the circumference of the cylinder part 40 or the rotary shaft 6 of the intaglio roll 4. The intaglio roll contact body 400 is at an opposite position to the printing roll contact body 300.

A diameter of the contact body 400 may be equal to, or larger or smaller than that of the cylinder part 40, in other words, variable with an allowance of approximately ±2.0mm to a diameter of the cylinder part 40.

Both or either of surfaces of the printing roll contact bodies and the intaglio roll contact bodies may be formed of metal, or a resin or rubber elastic body 310 can be fitted at both or either of the surfaces of the printing roll contact bodies and the intaglio roll contact bodies (Fig. 6). With the adoption of the resin or rubber elastic body 310, individual size differences brought about when the intaglio roll 4 or the elastic letterpress 31 is exchanged can be absorbed, and moreover, metallic abrasion particles which would cause product failures are eliminated. The printing roll contact bodies and, the intaglio roll contact bodies can be totally formed of metal or consist of the resin or rubber elastic body 310.

A material for the elastic body 310 fitted at least at a surface of either of the printing roll contact bodies and the intaglio roll contact bodies is the same or the same series as that of the elastic letterpress 31 fitted to the printing roll 3. That is, a resin, rubber or the like of completely the same or approximately the same mechanical characteristics (for instance, values of a hardness, a reaction force, etc.) as those of the elastic letterpress 31 may be suitably selected and used for the elastic body 310. In this case, the state similar to the contact state between the elastic letterpress 31 fitted to the printing roll 3 and the intaglio roll 4 can be produced before the elastic letterpress 31 fitted to the printing roll 3 and the intaglio roll 4 actually come in touch with each other, and therefore impacts on the occasion of the actual touch between the letterpress 31 fitted to the printing roll 3 and the intaglio roll 4 can be effectively prevented. At the same time, size accuracy, reliability, availability, etc. are advantageously satisfied.

Particularly in the case where the elastic body 310 is fitted at the surface of either of the printing roll contact bodies and the intaglio roll contact bodies and the other face of the contact bodies is formed of metal, the contact state between the printing roll contact bodies 300 and the intaglio roll contact bodies 400 is rendered the same as that of the elastic letterpress 31 which is elastic and the intaglio roll 4 having the metallic surface. Accordingly, physical properties such as the hardness, reaction characteristics, etc. are uniformed thereby to facilitate adjustment of devices. The elastic body 310 can be obtained economically if the material left after the elastic letterpress 31 is manufactured is utilized.

When the elastic body 310 fitted at the surface of the contact bodies 300 or 400 is made exchangeable to change at least one of a breadth, a thickness and a hardness thereof, a contact pressure between the elastic letterpress 31 of the printing roll 3 and the surface of the intaglio roll 4 can be varied. An increase of at least one of the breadth, thickness and hardness of the elastic body 310 can maintain the contact pressure between the elastic letterpress 31 of the printing roll 3 and the surface of the intaglio roll 4 at a small constant value. On the other hand, a decrease of at least one of the breadth, thickness and hardness can keep the contact pressure between the elastic letterpress 31 of the printing roll 3 and the surface of the intaglio roll 4 at a large constant value. When the elastic body 310 is fitted to the surface of the printing roll contact body and no elastic body is fitted to the intaglio roll contact body 400, the thickness of the elastic body 310 set to the printing roll contact bodies 300 or the intaglio roll contact bodies 400 can be changed, for instance, within an allowance of about ±1.0mm to a distance of surfaces of the printing roll contact body 300 and the intaglio roll contact body 400 without the elastic body provided. The allowance in thickness of the elastic body of the printing roll contact body 300 may be not larger than ±20% to the thickness of the elastic letterpress 31.

When the ink adheres to the intaglio roll contact bodies 400, the ink is accumulated and scatters thereby making the neighborhood dirty. For solving this, a groove part 401 or projecting part 402 may be formed between the intaglio roll contact body 400 and the ink hold part 4a at the cylinder part 40 of the intaglio roll 4 to prevent the ink from flowing to the contact body 400 from the ink hold part 4a (Figs. 4, 5).

In the thin film formation apparatus of the above embodiments of the present invention, the printing roll contact bodies 300 are arranged to be continuously in touch with the intaglio roll contact bodies 400 at least before the elastic letterpress 31 comes in touch with the intaglio roll 4 and all through the contact. The contact bodies 300 and 400 can be held in touch with each other prior to the contact of the printing image part of the letterpress 31 of the printing roll 3 with the intaglio roll 4. More specifically, before the printing image part of the elastic letterpress 31 of the printing roll 3 comes in touch with the intaglio roll 4, the rotary shaft 6 of the printing roll 3 or/and the intaglio roll 4 can be pressed to the inner rings of the bearings to bend the roll to a bending limit, so that a distance of the rotary shafts of the printing roll 3 and the intaglio roll 4 inside the pairing contact bodies 300 or 400 can be kept constant. Owing to the arrangement, impacts when the intaglio roll 4 and the printing image part on the printing roll 3 are changed from the non-contact state (Figs. 1, 3 12A) to the contact state (Figs. 12B, 2, 4, 5) are eliminated, and subsequent microscopic bounding is lessened.

A liquid crystal orientation film is printed `under the following conditions with the use of the thin film formation apparatus according to the embodiment of Fig. 6 in the present invention.
- Intaglio roll (anilox roll): 180mm diameter
- Cylinder part of printing roll: 250mm diameter (including elastic letterpress of 2.84mm thickness × 2)
- Elastic letterpress: APR letterpress by Asahi Kasei Inc.
- Intaglio roll contact body: 180mm diameter (50mm breadth)
- Printing roll contact body: 250mm diameter (including elastic body of 2.84mm thickness × 2, 50mm breadth)
- Body to be printed (glass): 370mm height × 480mm breadth × 1.1mm thickness with transparent conductive film

A comparison example to the specified example of the embodiment is obtained by the apparatus without using the intaglio roll contact body and printing roll contact body. Appearances of the printed samples are evaluated with interference colors and thicknesses are measured for the comparison of the examples. In the comparison example, the pressed-in amount of the elastic letterpress is reduced in a range of 70mm from a front end part 600a of a glass substrate 600, and therefore a part of a larger film thickness than the other parts is produced in a liquid crystal orientation film 700 on the printed glass substrate 600. In addition, stripe patterns are observed due to a thickness change because of vibrations of the rolls in a range of 250mm from the front end part (Fig. 11). A thickness accuracy of the printed film in the same substrate is ±8%.

In contrast, in the same evaluation test to the sample according to the embodiment, a thicker part than the other parts is not present in a range of 70mm from a front end part, the rolls are less vibrated and stripe patterns resulting from the film thickness change subsequent to the vibrations are reduced in a range of 250mm from the front end part. The printed film according to the embodiment shows a thickness accuracy of ±6% in the same substrate (referring to Fig. 13).

When a thin film formation is performed on the glass substrate under the above conditions, the thin film with a uniform thickness can be formed.

As discussed hereinabove, in the embodiments, the printing roll contact bodies 300 and the intaglio roll contact bodies 400 are arranged to be in touch with each other continuously at least before the contact of the elastic letterpress 31 with the intaglio roll 4 and all through the contact. Thus, although the rotary shaft 6 outside the pair of the printing roll contact bodies 300 or/and the rotary shaft 6 outside the pair of the intaglio roll contact bodies 400 is bent because of the stress due to the contact of the contact bodies 300 and 400 even before the printing image part of the elastic letterpress 31 starts to touch the intaglio roll 4, the cylinder part 30 or the rotary shaft 6 inside the pair of printing roll contact bodies 300, or/and the cylinder part 40 or the rotary shaft 6 inside the pair of intaglio roll contact bodies 400 becomes hard to bend. Moreover, because of the stress caused by the contact of the contact bodies 300 and 400, the printing roll 3 and the intaglio roll 4 are pressed in an opposite direction to a direction in which the rolls are in pressed touch with each other, by the amount of a play of the bearing 5 itself and a play 100 between the rotary shaft 6 at the bearing part of the bearing 5 and the inner ring of the bearing 5, whereby the plays are actually decreased.

Before the printing image part of the elastic letterpress 31 starts to touch the intaglio roll 4, the bend and the play of the printing roll 3 and the cylinder part 40 of the intaglio roll 4 are lessened owing to the presence of pairs of the printing roll contact bodies 300 and the intaglio roll contact bodies 400, as depicted hereinabove. At the same time, before the start of the contact between the printing image part of the elastic letter-press 31 and the intaglio roll 4, the contact state therebetween is reproduced because of the contact of the pairs of the printing roll contact bodies 300 and the intaglio roll contact bodies 400. Therefore, a change in the contact pressure due to the impacts mainly when the printing image part of the printing roll 3 starts to touch the ink hold part 4a of the intaglio roll 4 (referring to Fig. 12B) is eased, and stripe patterns (alternate appearance of parts where the amount of transferred ink or film thickness is large and small) in parallel to an axial direction of rolls are prevented in the elastic letterpress 31 or the body 156 to be printed. Also a change of the contact pressure between the printing image part of the printing roll 3 and the body 156 to be printed is eased similarly, so that the stripe patters due to this change of the contact pressure therebetween are avoided.

According to the present invention, since contact members coming in touch prior to the patterns of the elastic letter-press, for example, the above-described contact bodies are provided between the intaglio roll and the printing roll, vibrations of both rolls during printing can be restricted and a pressure of the elastic letterpress is stabilized, thereby to reduce print irregularities resulting from the film thickness change.

The entire disclosure of Japanese Patent Application No. 8-87294 filed on March 15, 1996, including specification, claims, drawings, and summary are incorporated herein by reference in its entirety.

Although the present invention has been fully described in connection with the preferred embodiments thereof with reference to the accompanying drawings, it is to be noted that various changes and modifications are apparent to those skilled in the art. Such changes and modifications are to be understood as included within the scope of the present invention as defined by the appended claims unless they depart therefrom.

## Claims

1. A thin film formation apparatus which includes a printing roll (3) having a resin or rubber elastic letterpress (31) fitted at a surface thereof, and an intaglio roll (4) for transferring ink to a surface of the elastic letterpress through contact with the printing roll,
wherein contact members (300, 400) are provided at the printing roll and the intaglio roll for absorbing or easing contact impacts prior to the contact between the intaglio roll and the elastic letterpress of the printing roll.

2. A thin film formation apparatus according to claim 1, wherein the contact members are constructed by a pair of printing roll contact bodies (300) set at a cylinder part (30) or a rotary shaft (6) of the printing roll, and a pair of intaglio roll contact bodies (400) set at a cylinder part (40) or a rotary shaft (6) of the intaglio roll, so that the contact bodies are in touch with each other continuously at least before the elastic letterpress comes in touch with the intaglio roll and throughout the contact, thereby to absorb or ease the contact impacts between the intaglio roll and the elastic letterpress of the printing roll.

3. A thin film formation apparatus according to claim 2, wherein the contact bodies are adapted to be in touch with each other continuously at least before the elastic letter-press comes in touch with the intaglio roll and throughout the contact, thereby to absorb or ease the contact impacts between the intaglio roll and the elastic letterpress of the printing roll, whereby before the elastic letterpress and the intaglio roll start to come in touch with each other, a stress resulting from the contact between the printing roll contact bodies and the intaglio roll contact bodies refrains the cylinder part (30) or the rotary shaft (6) of the printing roll inside the pair of the printing roll contact bodies, or/and the cylinder part (40) or the rotary shaft (6) of the intaglio roll inside the pair of the intaglio roll contact bodies from bending.

4. A thin film formation apparatus according to claim 2 or 3, wherein the contact bodies are adapted to be in touch with each other continuously at least before the elastic letterpress comes in touch with the intaglio roll and throughout the contact, thereby to absorb or ease the contact impacts between the intaglio roll and the elastic letterpress of the printing roll, whereby a stress resulting from the contact between the printing roll contact bodies and the intaglio roll contact bodies presses the printing roll and the intaglio roll in an opposite direction to a direction in which the rolls are pressed in touch with each other, by the amount of a play of a bearing (5) itself supporting each rotary shaft (6) of the printing roll and the intaglio roll in a rotatable fashion to supporting members (2) and a play (100) between each rotary shaft at a bearing part of the bearing and an inner ring of the bearing, thereby to substantially reduce the plays.

5. A thin film formation apparatus according to any one of claims 1-4, which has the pair of intaglio roll contact bodies set at the cylinder part of the intaglio roll, and further includes a pair of projecting parts (402) or groove parts (401) between an ink hold part (4a) of the intaglio roll and the intaglio roll contact body so as to prevent the ink from flowing from the ink hold part to the intaglio roll contact body.

6. A thin film formation apparatus according to any one of claims 1-5, wherein a resin or rubber elastic body (310) is fitted at a surface of at least either of the printing roll contact body and the intaglio roll contact body.

7. A thin film formation apparatus according to any one of claims 1-6, wherein a resin or rubber elastic body (310) is fitted at a surface of at least either of the printing roll contact body and the intaglio roll contact body, said resin or rubber elastic body (310) being formed of the same or same series material as that of the elastic letterpress mounted to the printing roll.

8. A thin film formation apparatus according to any one of claims 1-7, wherein an elastic body (310) is fitted in an exchangeable manner at a surface of the printing roll contact body or the intaglio roll contact body, whereby a contact pressure between the elastic letterpress of the printing roll and the surface of the intaglio roll is changed by changing at least one of a breadth, a thickness and a hardness of at least one of said elastic bodies.
